Europäisches Patentamt

European Patent Office

Office européen des brevets

(11) Veröffentlichungsnummer: **0 284 810**
**A2**

(12) **EUROPÄISCHE PATENTANMELDUNG**

(21) Anmeldenummer: **88103260.1**

(22) Anmeldetag: **03.03.88**

(51) Int. Cl.⁴ **G02B 23/16**

(30) Priorität: **02.04.87 DE 3711164**

(43) Veröffentlichungstag der Anmeldung:
**05.10.88 Patentblatt 88/40**

(84) Benannte Vertragsstaaten:
**DE FR GB IT NL**

(71) Anmelder: **Firma Carl Zeiss**

**D-7920 Heidenheim (Brenz)(DE)**

(84) **DE FR IT NL**

(71) Anmelder: **CARL-ZEISS-STIFTUNG trading as CARL ZEISS**

**D-7920 Heidenheim (Brenz)(DE)**

(84) **GB**

(72) Erfinder: **Meier, Hans-Jürgen, Dipl.-Ing.**
**Langertstrasse 58**
**D-7080 Aalen(DE)**

(54) **Steckelementeinrichtung zur Halterung von Bauteilen in Stapeln.**

(57) Die Befestigung einer oder mehrerer Bauteile erfolgt senkrecht zur Steckachse an der Außenseite von Steckelementen, welche in axialer Richtung aneinandergefügt sind. Die Verbindung der einzelnen Steckelemente kann dabei fest oder lösbar sein.

# Fig. 2b

EP 0 284 810 A2

## Steckelementeinrichtung zur Halterung von Bauteilen in Stapeln

Die Erfindung betrifft eine Einrichtung zum Halten von Bauteilen in Stapeln und besteht aus mehreren Steckelementen.

Die in der Optik bekannten steckfähigen Einrichtungen sind Distanzringe oder Fassungen zur Aufnahme von optischen Komponenten in dem Inneren der Fassungen (US-PS-4 390 242,US-PS-4 443 061, US-PS-4 311 364, DE-PS-3 534 955). Auch sind Steckverbindungen fur Tragekordeln oder -ketten für optische Geräte bekannt (z.B. DE-PS-3 419 298). Für faserförmige Lichtwellenleiter ist aus dem Gebrauchsmuster 86 22 121 eine Fixiervorrichtung in einem Steckergehäuse bekannt, bei dem ein innerer Haltekörper verwendet wird.

Außerdem ist bekannt, ringförmige Endflansche aus einzelnen "Herdringen" bei Wolter-Teleskopen zu verwenden. Dabei werden einzelne Befestigungsringe ineinandergesetzt und an ihnen die einzelnen Schalen des Teleskopes befestigt. Die Montage der einzelnen Schalen beginnt von innen. Jede Schale muß einzeln justiert und fixiert werden. Die Befestigungseinrichtung muß dabei sowohl für Hyperbel-als auch für Parabelschalen geeignet sein. Die Befestigungsringe haben die Funktion von Dehnkrägen und kommen einmal in der Mitte und je einmal an den beiden Enden der Schalenpakete vor. Diese Befestigungsart benötigt eine sehr komplizierte Struktur der Fassungselemente.

Der Erfindung liegt die Aufgabe zugrunde, eine Einrichtung zum festen Halten von Bauteilen in Stapeln zu schaffen, welche einen schrittweisen Aufbau dieser Stapel ermöglicht.

Die Aufgabe wird erfindungsgemäß dadurch gelöst, daß jedes Steckelement einen Buchsen-und Steckteil aufweist, in den beim Stapeln ein Steck-oder Buchsenteil des nachfolgenden Steckelementes eingreift, daß jedes Steckelement mindestens eine Fläche aufweist, die beim Stapeln mit einer Gegenfläche des nachfolgenden Steckelementes in Kontakt kommt und dabei die Steckachse festlegt, und daß an der im wesentlichen parallel zur Stapelachse verlaufenden Außenfläche jedes Steckelements die Befestigung eines Bauteils erfolgt.

Die Steckelemente nach Anspruch 1 ermöglichen den Aufbau von Speichen, an deren Außenseite Bauteile befestigt werden können. Wesentlich ist dabei, daß die entstehenden Speichen in einzel nen Schritten aufgebaut werden können und die Befestigung je nach Bedarf punktuell oder an der ganzen Außenfläche erfolgen kann. Vorteilhafterweise erzeugen die Steckelemente durch eine geeignete Formgebung eine Lageorientierung für die angrenzenden Steckelemente. Beim Aufbau von Speichen wird so eine Richtungsorientierung in der gewünschten Art und Weise sichergestellt. Auch läßt sich durch eine geeignete Formgebung eine Drehung um die Steckachse verhindern.

Eine Öffnung in Richtung der Steckachse sorgt einerseits für eine Gewichtsreduzierung, andererseits kann man durch diese Öffnung für eine fixierende, lösbare Befestigung für die Steckelemente führen. Bei einer besonders vorteilhaften Befestigung dieser Art wird durch Zugelemente eine feste, aber dennoch lösbare Verbindung geschaffen. Eine besonders vorteilhafte lösbare Verbindung erhält man, wenn die einzelnen Steckelemente durch eine Schraubverbindung miteinander verbunden werden.

Zu einer fixierenden, festen Befestigung führt eine Verklebung der einzelnen Steckelemente.

Je nach Art der Befestigung der Bauteile an den Steckelementen können diese klemmend sein oder nur Aussparungen zur Befestigung der Bauteile aufweisen. Die Befestigungsmöglichkeit der Bauteile an den Steckelementen kann lokal oder umlaufend sein.

Der Querschnitt der Steckelemente senkrecht zur Steckachse kann jede Flächenform aufweisen.

Die jeweilige Form der Steckelemente ergibt sich aus dem jeweiligen Problem und kann sich im Laufe des Steckvorganges problemangepaßt beliebig verändern. Insbesondere das Maß der jeweiligen Aufnahmenut kann der aktuellen, in der Fertigungstoleranz liegenden Form des zu befestigenden Bauteiles auch noch bei der Montage angepaßt werden. Die besondere Anpassungsfähigkeit dieser Einrichtung zeigt sich besonders darin, daß man die Steckelemente individuell den zu haltenden Bauteilen anpassen kann und damit definierte Bedingungen an den Haltepunkten erhält.

Mit diesen Steckelementen lassen sich in vorteilhafter Weise Speichen aufbauen, wobei ein Innen-mit einem Außenelement durch langsamen Aufbau der Verbindungslinien miteinander verbunden werden kann. Dies gilt insbesondere bei der Verbindung eines inneren-und äußeren Tragrohres eines Wolter-Teleskopes durch radiale Speichen. Hierbei sollten mindestens zwei Speichenebenen à drei Speichen vorhanden sein, wobei eine Schalengruppe dann von mindestens sechs Speichen gehalten wird.

Die Bauteile werden wegen der benötigten starren Verbindung bei dem Aufbau eines Wolter-Teleskopes klebend mit den Steckelementen verbunden. Dabei ergibt sich eine wesentliche Gewichtsreduzierung im Gegensatz zu bisherigen Konstruktionen mit Mittelflansch. Durch diese Erfindung zur Befestigung von Bauteilen kann man bei geeigneter Formgebung der Steckelemente Schalengruppen in den Besselschen Punkten befestigen.

Die Erfindung wird im folgenden in den Zeichnungen 1-8 für Wolter-Teleskope näher beschrieben, wobei im einzelnen darstellen

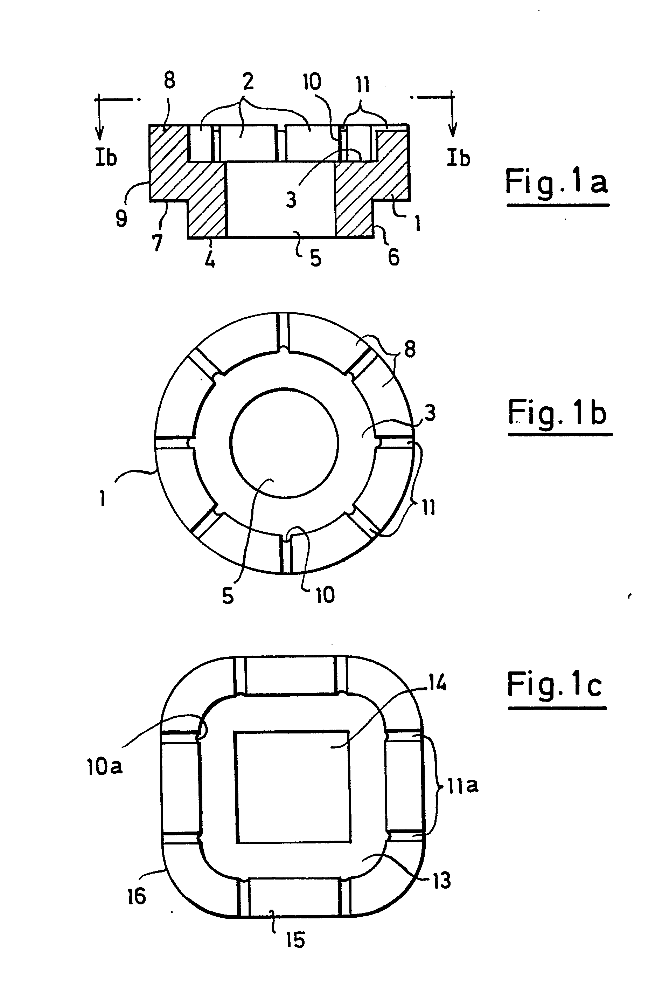

Figur 1a ein erfindungsgemäßes Steckelement mit einer Bohrung im Längsschnitt;

Figur 1b eine Aufsicht auf eine erste Steckelementvariante der in Fig. 1a gezeigten Art;

1c eine Aufsicht auf eine zweite Steckelementvariante der in Fig. 1b gezeigten Art;

2a ein Speichenaufbau mit einer dritten Steckelementvariante der in Fig. 1a gezeigten Art;

2b ein Speichenaufbau mit einer vierten Steckelementvariante der in Fig. 1a gezeigten Art;

3a die Deformation von Schalen bei zu niedrigem Abstand der Lastpunkte;

3b die Deformation von Schalen bei zu großem Abstand der Lastpunkte;

3c die Besselschen Punkte kleinster Deformation der Schalentangenten;

4 eine Montageanordnung eines Wolter-Teleskopes unter Benutzung des Steckelementes der Figur 1a;

5a ein erfindungsgemäßes Steckelement mit zwei Bohrungen im Längsschnitt;

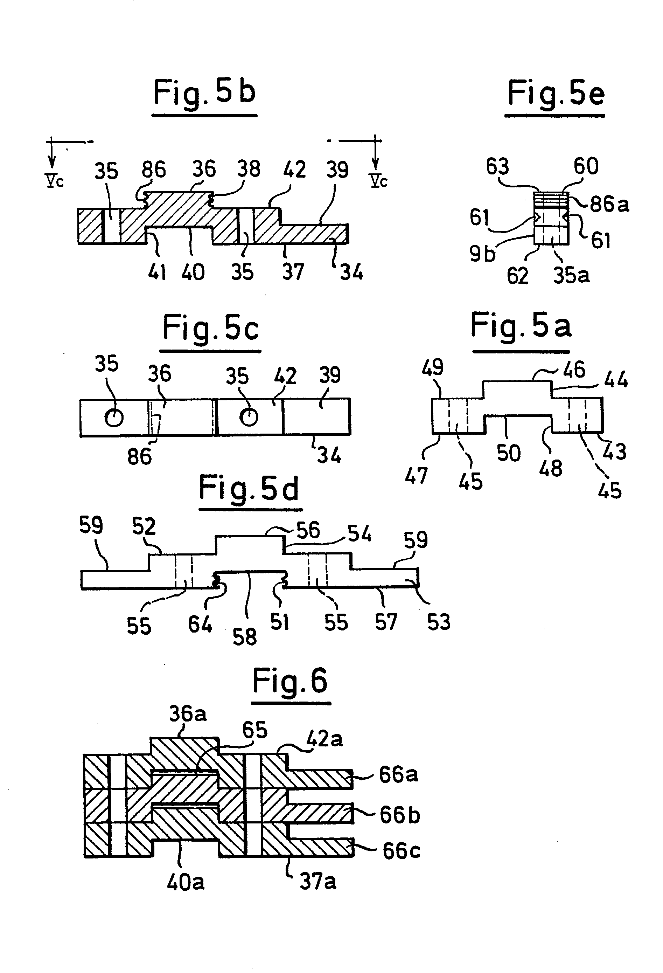

5b eine Steckelementvariante nach der in Fig. 5a gezeigten Art mit einer Aufnahmennut;

5c eine Aufsicht auf ein Steckelement nach Fig. 5b;

5d eine Steckelementvariante nach der in Fig. 5a gezeigten Art mit zwei Aufnahmenuten;

Figur 5e eine Seitenansicht einer dritten Steckelementvariante der in Fig. 5a gezeigten Art mit einer Verankerungsnut;

Figur 6 ein Speichenaufbau mit einer vierten Steckelementvariante der in Fig. 5a gezeigten Art;

Figur 7 eine Montageanordnung eines Wolter-Teleskopes unter Benutzung des Steckelementes der Figur 4;

Figur 8 ein fertiges Wolter-Teleskop, Außenansicht;

Das in Figur 1a im Längsschnitt gezeigte Steckelement (1) mit Zentralbohrung (5) erlaubt den Aufbau einer Speiche durch Zusammenfügung mehrerer gleicher oder angepaßter Steckelemente (1). Werden mehrere Steckelemente (1) zusammengesetzt, so bleibt ein durchgehender Hohlraum frei. Die Ausbildung des Hohlraumes erfolgt aus dem Wunsch nach Gewichtsreduzierung und um eine lösbare Verbindung im Innern realisieren zu können. Diese hier nicht gezeigte lösbare Verbindung im Innern erlaubt die freie, ungestörte Montage an den Außenflächen und dient als "Klemme" beim Zusammenkleben der einzelnen Steckelemente (1).

Bei dem Zusammenfügen zweier Steckelemente (1) kann das obere Steckelement (1) entweder mit der inneren Steckerstirnfläche (4) auf der inneren Buchsenstirnfläche (3) des unteren Steckelementes (1) oder mit der äußeren Steckerstirnfläche (7) auf der äußeren Buchsenstirnfläche (8) aufliegen; beide Möglichkeiten garantieren einen definierten Sitz. Bei einer Verklebung muß darauf geachtet werden, daß diese Flächen (3,4,7,8) möglichst nicht klebend verbunden werden. Da der Klebstoff zum einen einen anderen thermischen Ausdehnungskoeffizienten hat wie das Material des Steckelementes (1), zum anderen die jeweilige Dicke des Klebfilmes nicht einwandfrei vorherbestimmbar ist, würde die Benutzung der Flächen (3,4,7,8) die Qualität der aufgebauten Speiche mindern.

Dagegen eignen sich der Buchsendurchmesser (2) und der Stecker durchmesser (6) des Steckelementes (1) besonders gut als Klebeflächen beim festen Verbinden der einzelnen Steckelemente (1) zum Aufbau einer Speiche. Um zum Verkleben die einzelnen Steckelemente (1) nicht mehr lösen zu mussen, ist es vorteilhaft, auf dem Buchsendurchmesser (2) oder dem Steckerdurchmesser (6) Klebetaschen (10) vorzusehen, in welche der Klebstoff durch die Klebkanäle (11) gelangen kann. Es ist auch denkbar, daß die Klebtaschen (10) alle miteinander verbunden sind und der Klebstoff nur durch einen Klebekanal (11) zugeführt wird.

In Figur 1b eine Aufsicht auf das Steckelement (1) gezeigt. Außer der Zentralbohrung (5) sind vor allem die innere (3) und äußere (8) Buchsenstirnfläche zu sehen. In die äußere Buchsenstirnfläche (8) sind Klebkanäle (11) eingelassen, die in Klebtaschen (10) münden.

In Fig. 1c ist eine eckige Steckelementvariante (16) des Steckelementes (1) zu sehen. Auch hier - schließt sich einer Zentralbohrung (14) eine innere (13) und äußere (15) Buchsenstirnfläche an, außerdem sind Klebkanäle (11a) und Klebtaschen (10a) vorhanden.

Je nach Ausgestaltung der parallel zur Steckrichtung orientierten Außenfläche (9) in Fig. 1a können die zu befestigenden Bauteile klemmend, klebend oder auf eine andere Art und Weise befestigt werden. Hierbei bietet sich insbesondere die Verwendung eines Gewindes an dem Buchsendurchmesser (2) und an dem Steckerdurchmesser (6) an, um eine Schraubbefestigung zwischen zwei Steckelementen (1) zu erhalten. Diese Möglichkeit ist in der Figur 1a nicht extra eingezeichnet.

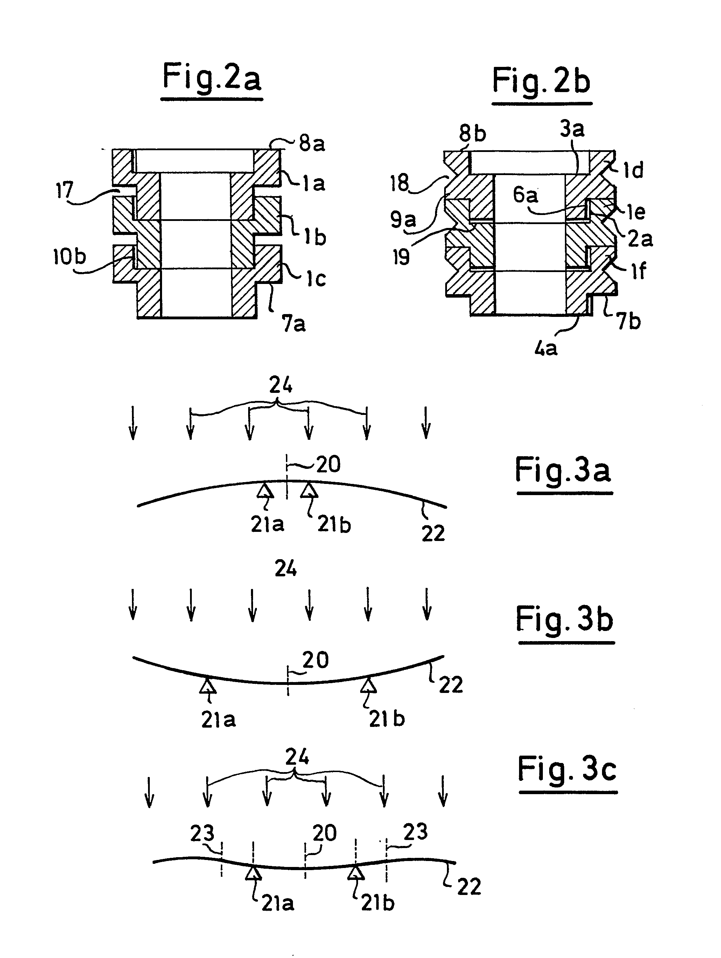

In Figur 2a ist gezeigt, wie die zusammengefügten Steckelemente (1a,b,c) zusammenpassen. Durch das Zusammenfügen der Steckelemente (1a,b,c) in Figur 2a entsteht zwischen der äußeren Steckerstirnfläche (7a) des Steckelementes (1a) und der äußeren Buchsenstirnfläche (8a) des Steckelementes (1b) eine Aufnahmenut (17),in welcher ein Bauteil befestigt werden kann. Dieser Raum für die Befestigung kann umlaufend (oder nur an einer oder an mehreren Seiten) vorhanden sein. Dieselben Verhältnisse liegen zwischen den Steckelementen (1b und 1c) vor. Die Aufnahmenut (17) ermöglicht es auf Klebkanäle zu verzichten, so daß die Klebtaschen (10b) durch die Aufnahmenut (17) von außen gefüllt werden können.

In Figur 2b ist eine Verankerungsnut (18) zur Befestigung in die Außenfläche (9a) der Steckelemente (1d,e,f) angebracht, wodurch eine vorteilhafte Ausbildung der Außenfläche (9a) für eine Klebeverbindung zwischen den Steckelementen (1d,e,f) und den Bauteilen erreicht wird. Die äußere Steckerstirnfläche (7b) des Steckelementes (1d) und die äußere Buchsenstirnfläche (8b) des Steckelementes (1e) liegen aufeinander. Eine klebende Verbindung zwischen dem Steckerdurchmesser (6a) des Steckelementes (1d) und der Buchsendurchmesser (2a) des Steckelementes (1e) sorgt für eine feste, fixierende Verbindung der beiden Steckelemente (1d,e). Vorteilhafterweise liegen die innere Buchsenstirnfläche (3a) des Steckelementes (1e) und die innere Steckerstirnfläche (4a) des Steckelementes (1d) nicht exakt aufeinander, sondern begrenzen einen freien Raum (19) für eine eventuelle nachträgliche Verklebung der Klebeflächen (2a mit 6a).

Die in Figur 1 und 2 beschriebenen Steckelemente (1) eignen sich besonders zur Befestigung von Schalen in deren optimalen Befestigungspunkten. Dies sei in den Figuren 3a-c erläutert.

In Figur 3a wird ein gerader Träger (22) durch die angreifenden Kräfte (24) belastet. Wenn seine beiden Auflager (21a und 21b) sich zu nahe beieinander befinden, wird sich der Träger (22) an seinen Enden durchbiegen. Zwischen den beiden Auflagern (21a und 21b) kommt es dabei zu einer Erhebung. Diese Verhältnisse sind in dem gezeigten Fall symmetrisch zur Mitte (20) der Auflager (21a und 21b) und des Trägers (22).

Liegen hingegen, wie in Figur 3b die Auflager (21a und 21b) sehr weit außen, so biegt sich der Träger (22) in der Mitte (20) durch, mit seinem tiefsten Punkt zwischen den Auflagern (21a und 21b). Außerhalb der Auflager (21a und 21b) biegt sich der Träger (22) hingegen nach oben.

Figur 3c zeigt nun die optimale Position der Auflager (21a und 21b) . Auch hier sind die Verhältnisse symmetrisch zur Mitte (20) zwischen den Auflagern (21a und 21b). Der Träger (22) wird mit den Auflagern (21a und 21b) noch vor den Wendepunkten (23) unterstützt, wodurch sich eine insgesamt minimierte Deformation des Trägers (22) ergibt. Die Punkte, in denen ein Träger (22) unterstützt werden muß, um diese minimierte Deformation zu erhalten, werden Besselsche Punkte genannt.

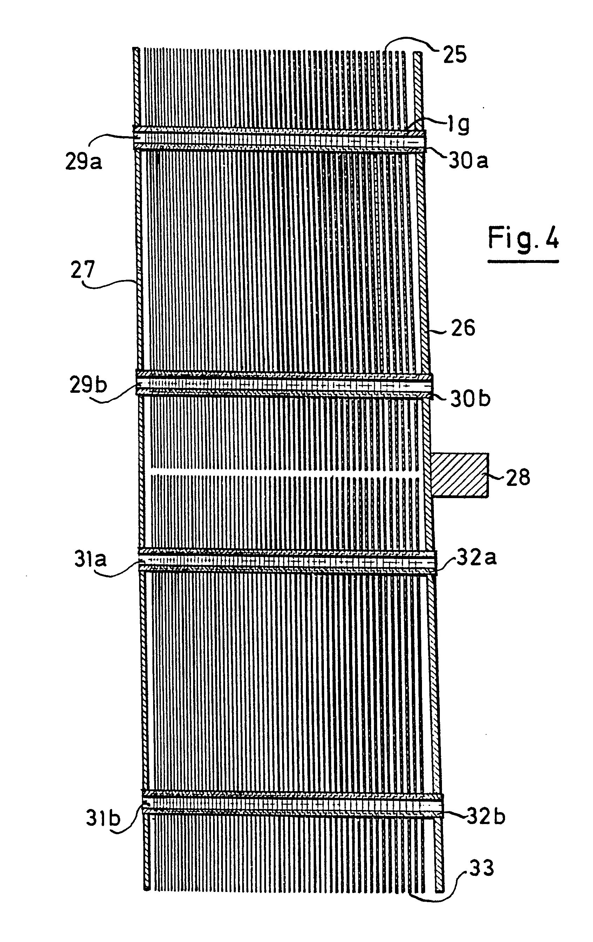

Nun gibt es in der Optik Komponenten, die einen schalenförmigen Aufbau haben. Dies ist zum Beispiel bei einem Wolter-Teleskop der Fall. Bei diesem dienen die Schalen zur Fokussierung der einfallenden Strahlung. Um ein optimales Fokussierergebnis zu erhalten ist es wesentlich, daß die Schalen eine möglichst geringe Deformation im Einsatz haben. Außerdem wird durch die Unterstützung in den Besselschen Punkten eine optimale Kräfteverteilung erreicht, wodurch die Baugröße der Schalenteile geringere Kräfte aushalten müssen und dementsprechend leicht gebaut werden können. In Figur 4 ist der Aufbau eines solchen Wolter-Teleskopes mit den beschriebenen Steckelementen gezeigt.

In Figur 4 ist ein aufgeschnittenes Wolter-Teleskop zu sehen. Die optisch wirksamen Komponenten dieses Teleskopes sind ein Paar von Schalen, von denen das dem Fokus zugewandte Paket aus Hyperbelschalen (25) besteht, während das der Quelle zugewandte Paket aus Parabelschalen (33) besteht. Die Schalen werden durch jeweils zwei mal drei radiale Speichen (30a und 30b) sowie (32a und 32b) gehalten, die ihrerseits das innere Tragrohr (27) mit dem äußeren Tragrohr (26) verbinden, wobei in der Figur aber nur zwei Speichen sichtbar sind. Am äußeren Tragrohr (26) ist auch der Zentralflansch (28) angebracht. Jede der Speichen (30a, 30b und 32a, 32b) besteht aus einzelnen Steckelementen (1g), die ineinandergesteckt und miteinander verklebt sind. Zur Erhöhung der Versteifung kann ein in die Bohrungen (29a,29b und 31a,31b) der Steckelemente (1g) befindliches Zugelement verwendet werden. Dieses Zugelement ist hier in dieser Zeichnung nicht gezeigt. Die einzelnen Schalen (33 und 25) sind mit den Speichen (30a, 30b und 32a, 32b) verklebt.

Figur 5a zeigt eine andere Ausführungsform des erfindungsgemäßen Gegenstandes. Das Steckelement (43) hat statt einer Zentralbohrung zwei Bohrungen (45). Diese Bohrungen (45) durch die äußere Steckerstirnfläche (49) und die äußere Buchsenstirnfläche (47) können als Öffnungen für Zugelemente dienen. Die Form des Steckers und der Buchse sorgen dafür, daß die Steckelemente (43) nicht mehr gegeneinander verdreht werden können. Vorteilhafterweise erfolgt die Klebung zwischen den Steckelementen (43) an dem Steckerdurchmesser (48) bzw. Buchsendurchmesser (44). Die innere Steckerstirnfläche (46) des unteren Steckelementes (43) findet ihr Gegenstück in der inneren Buchsenstirnfläche (50).

Figur 5b zeigt einen Schnitt durch eine Steckelementvariante (34) nach Art des Steckelementes (43) aus Fig. 5a. Auch hier sind zwei Bohrungen (35) durch die äußere Buchsen-(37) und Steckerstirnfläche (42) vorhanden. Die Steckelemente (34) sind so ausgeführt, daß die innere Steckerstirnfläche (36) des unteren im verbundenen Zustand parallel zur inneren Buchsenstirnfläche (40) des oberen Steckelementes (34) ist. Die Klebung findet an dem Buchsen-(41) und Steckerdurchmesser (38) statt, wobei letztere Klebetaschen (86) aufweist. Außerdem ist als wesentliche Neuerung eine Aufnahmenut (39) vorhanden, in welcher eine Befestigung eines Bauteiles erfolgen kann.

Figur 5c zeigt eine Aufsicht auf das Steckelement (34). In der Figur 5d sind an dem Steckelement (53) mit den zwei Bohrungen (55) zwei Haltelappen (59) vorhanden, so daß Bauteile zu beiden Seiten einer Speiche befestigt werden können, wobei die Speiche aus einzelnen Steckelementen (53) aufgebaut ist. Bei dem Steckelement (53) sind die Klebetaschen (64) in dem Buchsendurchmesser (51) vorhanden. Wie bei dem Grundelement der Steckelemente (43) dieser Bauart, verbinden die Bohrungen (55) die äußere Buchsenstirnfläche (57) mit der äußeren Steckerstirnfläche (52). Die innere Stecker-(56) und Buchsenstirnfläche (58) zweier zusammengesetzter Steckelemente (53) liegen sich parallel gegenüber. Die Klebung zur festen Verbindung findet zwischen dem Stecker-(54) und Buchsendurchmesser (51) statt.

Figur 5e zeigt eine Seitenansicht eines Steckelementes (60) der in Figur 5a gezeigten Art (43). Man sieht genau auf den Steckerdurchmesser (63) mit den Klebetaschen (86a). Angedeutet ist eine Bohrung (35a) durch die äußere Buchsenstirnfläche (62). An den Seiten des Steckelementes (60) befinden sich jeweils eine Verankerungsnut (61) für die Befestigung der Bauteile.

In Figur 6 sind mehrere Steckelemente (66a,b,c) zusammengefügt. Bei der praktischen Ausführung der Steckelemente kann es auch hier, wie für Figur 2 beschrieben, günstig sein, dafür zu sorgen, daß sich zwischen der inneren Buchsenstirnfläche (40a) des oberen (66a) und der inneren Steckerstirnfläche(36a) des unteren Steckelementes (66b) ein Spalt (65) befindet, damit man zwei definierte Auflageflächen (hier mit 37a, 42a angegeben) erhält.

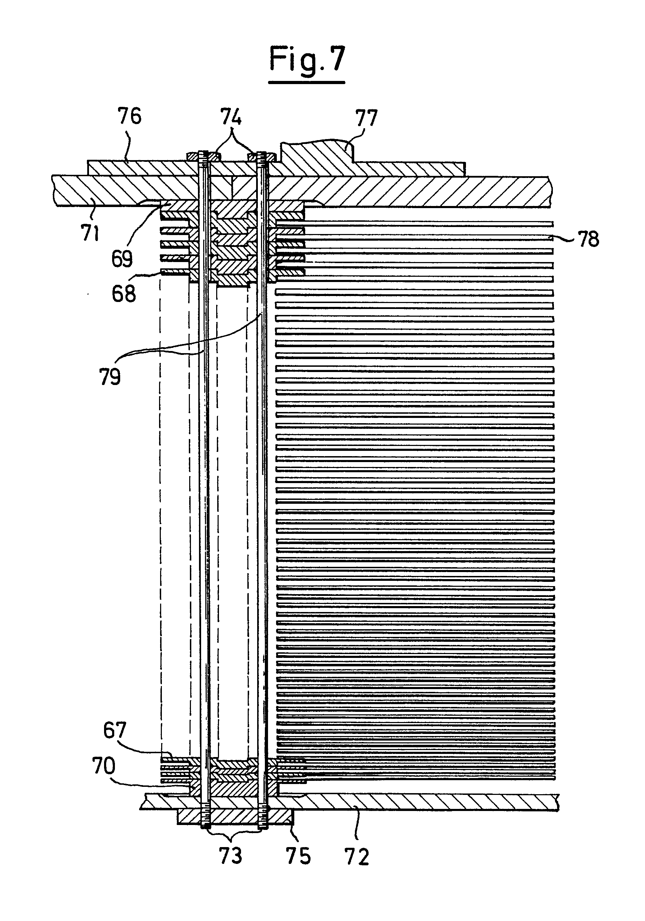

In Figur 7 ist ein aufgeschnittenes Wolter-Teleskop zu sehen, wobei hier die Schalen nicht in ihren Besselschen Punkten unterstützt werden. Zwischen dem inneren (72) und äußeren Tragrohr (71) befinden sich die Teleskopschalen (78). Sie werden von Steckelementen gehalten, welche erst etwas dünner (67) und dann etwas dicker (68) sind. Die jeweilige Aufnahmenut der Steckelemente (67,68) wird erst nach Ausrichtung der einzelnen Teleskopschale (78) hergestellt. Diese Bearbeitung der Aufnahmenut aus einem Rohrmaß zum jeweiligen Fertigmaß sichert einen Klebespalt von ca. 0,2 mm im Klebebereich der Teleskopschalen (78) mit den Steckelementen (67,68). An den Grenzen zum inneren Tragrohr (72) befindet sich ein Endstück (70), desgleichen ein als Übergang zum äußeren Tragrohr (71) geeignetes Endstuck (69) am anderen Ende. Zusammengehalten werden die Steckelemente (67,68) durch jeweils ein Zugelement (73) durch die beiden Bohrungen (79) der Steckelemente (67,68). Diese Zugelemente (73) haben auf der Innenseite des inneren Tragrohres (72) einem Spannbolzenanker (75). Auf der Außenseite des äußeren Tragrohres (71) dient ein Flanschrohr (76) als Halt für die Befestigungsmuttern bzw. -stifte (74). An diesem Flanschrohr (76) ist auch der Zentralflansch (77) des Teleskopes angebracht.

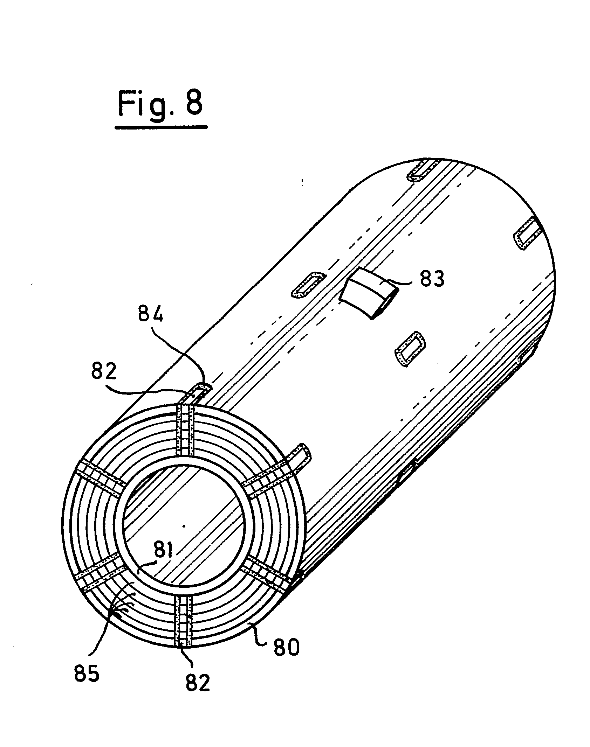

Figur 8 zeigt die Außenansicht eines Wolter-Teleskopes. Ein äußeres Tragrohr (80) umschließt die optische Eintrittsfläche (85), welche nach innen von einem inneren Tragrohr (81) begrenzt wird; die Schalen werden dabei von Speichen (82) gehal ten. Eine Befestigungsnut (84) verhindert eine radiale Verschiebung der Speichen (82) im Bereich der optischen Eintrittsfläche (85). Mit dem Zentralflansch (83) wird das Teleskop beim Einsatz gehandhabt.

## Ansprüche

1. Einrichtung zum Halten von Bauteilen (25,34,78) in Stapeln bestehend aus mehreren Steckelementen (1,1a-g,12,16,34,43, 53,66,67,68), dadurch gekennzeichnet, daß jedes Steckelement (1,1a-g,12,16,34,43,53,66,67,68) einen Buchsen- und Stecktteil aufweist, in dem beim Stapeln ein Steck-oder Buchsenteil des nachfolgenden Steckelementes (1,1a-g,12,16,34,43,53,66,67,68) eingreift, daß jedes Steckelement (1,1a-g,12,16,34,43,53,66,67,68) mindestens eine Fläche aufweist, die beim Stapeln mit einer Gegenfläche des nachfolgenden Steckelements (1,1a-g,12,16,34,43,53,66,67,68) in Kontakt kommt und dabei die Stapelachse festlegt, und daß an der im wesentlichen parallel zur Stapelachse verlaufenden Außenfläche jedes Steckelements (1,1a-g,12,16,34,43,53,66,67,68) die Befestigung eines Bauteils (25,34,78) erfolgt.

2. Einrichtung nach Anspruch 1, dadurch gekennzeichnet, daß in den Steckelementen (1,1a-g,12,16,34,43,53,66,67,68) mindestens eine Öffnung (5,14,35,45,55) in Richtung der Steckachse vorhanden ist.

3. Einrichtung nach Anspruch 1, dadurch gekennzeichnet, daß an den Außenseiten (9,9a,9b) der Steckelemente (1,1a-g, 12,16,34,43,53,66,67,68) Aussparungen (17,18,61) für die Montage der Bauteile (25,34,78) vorhanden sind.

4. Einrichtung nach Anspruch 1, dadurch gekennzeichnet, daß die Verbindung der einzelnen Steckelemente (1,1a-g, 12,16,34,43,53,66,67,68) durch Klebung miteinander an Klebetaschen (6a,10,10a,10b,64,86) fest ist.

5. Einrichtung nach Anspruch 1, dadurch gekennzeichnet, daß der Zusammenhalt mehrerer Steckelemente (67,68) durch eine Befestigung in ihrem Innern sichergestellt ist.

6. Einrichtung nach Anspruch 2 zum Halten von im wesentlichen runden Bauteilen, dadurch gekennzeichnet, daß radiale Speichen (82) aus den Steckelementen (1,1a-g, 12,16,34,43,53,66,67,68) aufgebaut sind.

7. Einrichtung nach Anspruch 6, dadurch gekennzeichnet, daß ein innereres und äußeres Tragrohr (72,81 und 71,80) durch die Speichen (82) verbunden ist.

8. Einrichtung nach Anspruch 1, dadurch gekennzeichnet, daß die Befestigung durch die Steckelemente (1,1a-g,12,16) in den Besselschen Punkten der Bauteile erfolgt.

9. Einrichtung nach Anspruch 1, dadurch gekennzeichnet, daß die Bauteile (25,34,78) mit den Steckelementen (1,1a-g,12,16,34,43,53,66,67,68) klebend verbunden sind.

10. Einrichtung nach Anspruch 1, dadurch gekennzeichnet, daß die Ausnehmungen zur Bauteil-Aufnahme erst nach Ausrichtung der zu befestigenden Bauteile ihre endgültige Form erhalten.

11. Einrichtung nach Anspruch 1, dadurch gekennzeichnet, daß die Form der Steckelemente der Form der zu haltenden Bauteile angepaßt ist.

Einrichtung nach Anspruch 1, dadurch gekennzeichnet, daß die einzelnen Steckelemente durch eine Schraubverbindung miteinander verbunden werden.

0 284 810

Fig.1a

Fig.1b

Fig.1c

## Fig.2a

17

8a
1a
1b
10b
1c
7a

## Fig.2b

8b   3a
18   1d
9a   6a
19   1e
2a
1f
4a   7b

24

20

21a  21b   22

## Fig.3a

24

## Fig.3b

20

21a       21b   22

24

## Fig.3c

23   20   23

21a   21b   22

Fig. 4

25
1g
30a
29a
27
26
29b
30b
28
31a
32a
31b
32b
33

## Fig. 5 b

## Fig. 5e

## Fig. 5c

## Fig. 5a

## Fig. 5d

## Fig. 6

0 284 810

# Fig.7

## Fig. 8

83

84

82

81

85

82

80